(19) Europäisches Patentamt
European Patent Office
Office européen des brevets

(11) Veröffentlichungsnummer: **0 119 507 B1**

(12) # EUROPÄISCHE PATENTSCHRIFT

(45) Veröffentlichungstag der Patentschrift: **29.07.87**

(51) Int. Cl.⁴: **C 08 B 31/00**, C 08 L101/00, D 21 H 3/28

(21) Anmeldenummer: **84101827.8**

(22) Anmeldetag: **22.02.84**

(54) **Verfahren zur Modifizierung von Stärke im wässrigen Medium.**

(30) Priorität: **21.03.83 DE 3310088**

(43) Veröffentlichungstag der Anmeldung: **26.09.84 Patentblatt 84/39**

(45) Bekanntmachung des Hinweises auf die Patenterteilung: **29.07.87 Patentblatt 87/31**

(84) Benannte Vertragsstaaten: **BE CH DE FR GB LI NL SE**

(56) Entgegenhaltungen:
**US-A- 2 961 339**
**US-A- 3 071 492**
**INDUSTRIAL AND ENGINEERING CHEMISTRY, Band 45, Nr. 11, November 1953, Seiten 2542-2544; R.W. KERR et al.: "Substituted silyl derivatives of starch"**
**DIE STÄRKE, Band 25, Nr. 12, Dezember 1973, Seiten 429-431; R.E. HARMON et al.: "Preparation of trimethylsilyl derivatives of polysaccharides"**

(73) Patentinhaber: **DYNAMIT NOBEL AKTIENGESELLSCHAFT**
**Postfach 1209**
**D-5210 Troisdorf, Bez. Köln (DE)**

(72) Erfinder: **Amort, Jürgen, Dr.**
**Ubierstrasse 9**
**D-5210 Troisdorf-Sieglar (DE)**
Erfinder: **Hanisch, Horst, Dr.**
**Fröbelweg 19**
**D-5202 Hennef (DE)**
Erfinder: **Klapdor, Ute**
**Zum alten Tor 11**
**D-5210 Troisdorf (DE)**
Erfinder: **van der Maas, Hendrikus**
**De Boogerd 25**
**NL-5305 CK Zuilichem (NL)**
Erfinder: **Suerken, Hans-Peter**
**Kloosterwiel 9**
**NL-5301 WH Zaltbommel (NL)**

EP 0 119 507 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Gegenstand der vorliegenden Erfindung ist ein Verfahren zur Modifizierung von Stärke im wäßrigen Medium. Die gemäß dem Verfahren erhaltene modifizierte Stärke enthält das Organosilan gebunden und kann direkt für an sich bekannte Anwendungszwecke besonders jedoch zur Hydrophobierung oder Oleophobierung von cellulosehaltigem Material eingesetzt werden.

Es ist z. B. aus der US-A-33 98 015 bekannt, selbsttragende Filme aus Amylose herzustellen und die Eigenschaften dieser Filme durch Behandlung mit Alkylchlorsilanen zu verbessern.

Weiterhin ist es bekannt, Stärke als Füllstoff in Polymeren einzusetzen, z. B. bei Urethanharzen (siehe z. B. EP-A1-00 58 921). Auch bei anderen Thermoplasten, z. B. Polyolefinen oder auch Elastomeren ist Stärke als Füllstoff bekannt (vgl. Shell Polymers, Vol. 5, No. 3 (1981), S. 73 bis 78). Für die Verwendung als Füllstoff werden auch Stärkederivate, wie z. B. die Ether oder Ester, eingesetzt. Es ist auch vorgeschlagen worden, mit Silikonen derivatisierte Stärke als Füllstoffe einzusetzen ; doch wird in diesem Fall die Stärke lediglich mit dem Silikon gemischt, so daß nur ein Gemisch von Stärke und Silikon vorliegt, in dem das Silikon nicht an die Stärke gebunden ist.

Beim Einsatz von Stärke als Füllstoff soll die Stärke sowohl eine oleophile Oberfläche als auch reaktive Zentren besitzen, die das Einarbeiten in das Polymere und die Haftung mit dem Polymeren verbessern. Zu diesem Zwecke werden bereits Organosilane als Haftvermittler zwischen Polymeren und anorganischen Füllstoffen eingesetzt, wobei die Füllstoffe auch als modifizierte Füllstoffe eingesetzt werden können. Die Modifikation erfolgt dabei in der Weise, daß die Füllstoffe mit dem Organosilan zur Reaktion gebracht werden, indem der Füllstoff mit dem Organosilan direkt, oder in einem Lösungsmittel gelöst, in Kontakt gebracht wird. Zusätzliche Reaktionsvermittler oder Katalysatoren sind bei dieser Reaktion nicht notwendig.

Wenn man nun in Analogie zu dieser bekannten Modifizierung von anorganischen Füllstoffen für Polymere versucht, Stärke im wäßrigen Medium in dieser Weise zu modifizieren, erhält man nicht die gewünschten Resultate : Die in wäßrigen Lösungen vorliegenden Organosilanole reagieren nicht mit Stärke ; eine Modifikation der Stärke tritt nicht ein ; es bleibt lediglich das im Lösungsmittel enthaltene Organosilan oberflächlich an der Stärke haften. Dieses Verhalten zeigen sowohl organofunktionelle als auch Alkoxysilane.

Es bestand deshalb aufgrund der von der Praxis gebotenen Forderung, Stärke im wäßrigen Medium zu modifizieren, die Aufgabe, ein Verfahren zu finden, Organosilanole im wäßrigen Medium auf Stärke zu fixieren. Die Stärke soll dann reaktive Zentren besitzen, die, z. B. aufgrund der organofunktionellen Reste bei organofunktionellen Silanen, mit funktionellen Gruppen von Polymeren in an sich bekannter Weise reagieren können oder die die Stärke, z. B. aufgrund der Alkylreste von Organosilanen, besonders stark hydrophob werden lassen, wodurch sich eine gute Dispergierbarkeit und gleichmäßige Verteilung der Stärke in Polymeren ergibt.

In Erfüllung dieser Aufgabe wurde nun ein Verfahren zur Modifizierung von Stärke mit Organosilanen gefunden, das dadurch gekennzeichnet ist, daß man Stärke in innigen Kontakt mit einer wäßrigen Lösung des Organosilans in Gegenwart von Alkalialuminat oder Alkalihydroxiden bringt.

Praktischerweise geht man bei der Durchführung des erfindungsgemäßen Verfahrens so vor, daß man das Organosilan in Wasser unter Bildung seines Hydrolysats löst, in dieser Lösung die Stärke suspendiert und diese Suspension mit einem Alkalialuminat oder einem Alkalihydroxid versetzt und dann dafür sorgt, daß die Stärke in steter Bewegung gehalten wird. Zweckmäßigerweise wird das Aluminat oder das Alkalihydroxid erst dann hinzugefügt, wenn die Stärke gut verteilt als Suspension in der Lösung des Organosilan-Hydrolysats vorliegt. Vorzugsweise wird die Suspension gerührt, wobei die Rührzeit und Rührgeschwindigkeit u. a. von der Größe des Ansatzes, der Form des Gefäßes und der Art der Rührer abhängen. Die Umsetzung erfolgt hierbei bereits bei Raumtemperatur. Eine Erwärmung nach Zusatz des Aluminats bzw. Alkalihydroxids ist möglich, dabei soll die Temperatur jedoch nicht die Quelltemperatur der entsprechenden Stärkeart erreichen, wenn man anschließend die modifizierte Stärke durch Abfiltrieren gewinnen will. Im allgemeinen hat nach einer Rührzeit von etwa 2 Stunden die dem Ansatz entsprechende Menge Silan mit der Stärke unter Bildung des Stärkederivats reagiert.

Bei dieser Herstellungsart erfolgt die Aufarbeitung des erfindungsgemäß erhaltenen Stärkederivats nach an sich bekannten Methoden durch Abtrennen der Stärke und anschließendem Waschen mit Wasser und Trocknen. Der Waschvorgang kann sowohl vor als auch nach dem Trocknen durchgeführt werden. Sofern keine Verunreinigungen während des Verfahrens eingeschleppt werden, kann ein Waschprozeß auch entfallen.

Es ist erfindungsgemäß jedoch auch möglich, die Modifizierung der Stärke so durchzuführen, daß man diese bei erhöhter Temperatur in eine wäßrige Lösung überführt und diese Lösung mit einer wäßrigen Lösung des Hydrolysats des Organosilans und dem Aluminat bzw. dem Alkalihydroxid versetzt. Das Aluminat bzw. Alkalihydroxid wird dabei vorzugsweise auch getrennt als wäßrige Lösung eingesetzt. Diese Lösung wird dabei vorzugsweise nach der Silan-Hydrolysat-Lösung dem Ansatz hinzugefügt. Eine gleichzeitige Zufügung der Silanol-Lösung und der Aluminat- bzw. Alkalihydroxid-Lösung zu der Stärkelösung ist jedoch auch möglich.

Die Temperatur, bei der die Zugabe des Silan-Hydrolysats und des Aluminats bzw. Alkalihydroxids

erfolgt, liegt im allgemeinen im Bereich der Verkleisterungstemperatur der entsprechenden Stärke. Ein Erhitzen über diese Temperatur ist nicht notwendig. Nach der Zugabe dieser beiden Lösungen wird die Stärkelösung intensiv gerührt. Während des Rührens kann man sie schon abkühlen lassen. Die erkaltete Stärkelösung zeigt dann schon die gewünschten Effekte.

Es ist auch möglich, die modifizierte Stärkelösung erinzudampfen und auf diese Weise eine pulvrige, modifizierte Stärke zu erhalten. Das Silan läßt sich aus dieser Stärke nicht mit Wasser auswaschen. Wenn dagegen die Modifizierung nicht in Gegenwart von Aluminat oder Alkalihydroxid durchgeführt wird, läßt sich aus einer so hergestellten silanhaltigen Stärke das Silan nahezu vollständig auswaschen.

Der Nachweis, daß die Stärke mit dem Organosilan reagiert hat, erfolgt im allgemeinen über eine Si-Gehaltsbestimmung. Dabei wird davon ausgegangen, daß theoretisch maximal pro freier Hydroxylgruppe der Stärke ein Mol Organosilan reagieren kann. In der Praxis genügen aber weit geringere Mengen an Organosilan, um der Stärke die oben genannten Eigenschaften zu verleihen. Es genügt bereits, wenn pro freier Hydroxylgruppe der Stärke nur 0,001 Mol des Organosilans an die Stärke gebunden vorliegt. Gute Ergebnisse werden bereits erzielt, wenn die an die Stärke gebundene Organosilanmenge 0,003 Mol pro Mol freier Hydroxylgruppe beträgt. Nach dem erfindungsgemäßen Verfahren lassen sich jedoch auch beträchtlich höhere Mengen des Silans an die Stärke binden, jedoch ist dann die Silanausbeute geringer.

Für die Reaktion zwischen der Stärke und dem Organosilan werden vorzugsweise verdünnte wäßrige Lösungen der Organosilane eingesetzt. Bereits aus 0,5 %igen Lösungen reagiert das Organosilan mit der Stärke ; konzentriertere Lösungen lassen sich ebenfalls einsetzen, jedoch reagiert beim Einsatz solcher Lösungen eine prozentual geringere Menge des Silans mit der Stärke als bei den verdünnten Lösungen.

Die Herstellung der wäßrigen Organosilanlösungen erfolgt auf an sich bekannte Weise. Die berechnete Menge des Silans wird in Wasser eingerührt, wobei das entsprechende Hydrolysat entsteht. Dabei kann zwischenzeitlich eine Trübung auftreten, die jedoch nach vollständiger Hydrolysatbildung verloren geht. Bei neutral reagierenden Organosilanen und bei höherer Konzentration kann zur schnelleren Hydrolyse eine katalytische Menge Säure (z. B. Salzsäure) hinzugesetzt werden.

Das Alkalialuminat wird vorzugsweise als wäßrige Lösung eingesetzt. Die Konzentration der Lösung spielt eine untergeordnete Rolle ; jedoch sollten nicht zu verdünnte Lösungen eingesetzt werden. Bevorzugt werden zwecks besserer Dosierung die handelsüblichen 50 %igen Aluminatlösungen auf 5 bis 15 % verdünnt. Prinzipiell ist es auch möglich, die konzentrierten Lösungen einzusetzen oder auch den Feststoff in der wäßrigen Suspension aus Stärke und Organosilan zu lösen.

Das bevorzugte Aluminat ist das Natriumaluminat. Das Alkalihydroxid wird bevorzugt ebenfalls als wäßrige Lösung eingesetzt, wobei die Konzentration zweckmäßigerweise zwischen 5 und 20 % liegen soll. Auch verdünntere Lösungen können eingesetzt werden, besonders dann, wenn wäßrige Lösungen der modifizierten Stärke erhalten werden sollen.

Unter Alkalihydroxiden sollen erfindungsgemäß die Hydroxide des Natriums und Kaliums verstanden werden. Das bevorzugte Alkalihydroxid ist das Natriumhydroxid.

Die einzusetzende Menge des Alkalialuminats oder des Alkalihydroxids soll so bemessen sein, daß auf 1 Mol Organosilan mindestens 0,3 Mol Alkalialuminat bzw. Alkalihydroxid entfallen. Das bevorzugte Molverhältnis liegt zwischen 1 : 0,4 und 1 : 1,5. Unter bestimmten Umständen kann auch ein höheres Molverhältnis bis zu 1 : 2 eingesetzt werden.

Es ist auch möglich, die Umsetzung zwischen Stärke, Organosilan und Aluminat bzw. Alkalihydroxid in nahezu wasserfreiem Medium durchzuführen. Dabei werden die Bestandteile in geeigneten Misch- bzw. Knetaggregaten, vorzugsweise Extrudern, innigst gemischt. Bei dieser Verfahrensweise ist es von Vorteil, das Organosilan als konzentrierte Lösung einzusetzen. Die Arbeitsweise in nahezu wasserfreiem Medium ermöglicht es auch, kurzzeitig bei Temperaturen oberhalb der Quelltemperatur der Stärke zu arbeiten.

Die Modifikation der Stärke durch Organosilane erfolgt erfindungsgemäß sowohl mit nativer als auch mit derivatisierter Stärke. Die native Stärke kann sowohl aus Früchten oder Samenkörnern, als auch aus Knollen oder Wurzeln stammen. So läßt sich erfindungsgemäß z. B. Weizenstärke, Maisstärke, Kartoffelstärke oder auch Reisstärke einsetzen. Die Stärkederivate, die erfindungsgemäß modifiziert werden können, sind hauptsächlich Ester und Ether oben genannter Stärkearten, sowie oxidierte Stärken. Auch kationisierte Stärke kann eingesetzt werden.

Die Organosilane, die erfindungsgemäß als Modifizierungsmittel eingesetzt werden können, umfassen Alkylalkoxysilane und organofunktionelle Alkoxysilane. Sie lassen sich durch die allgemeine Formel

$$Y-(CH_2)_n-\underset{\underset{\displaystyle (CH_3)_m}{|}}{Si}X_{3-m}$$

kennzeichnen, in der Y für eine, ggf. substituierte Aminogruppe oder für einen Rest aus der Gruppe H, $—CH_3$ ; —Cl ;

$-CH{=}CH_2$; $-SH$, 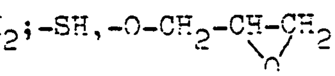

oder $-O-C(O)-C(CH_3){=}CH_2$ steht, X ein Alkoxyrest ist mit maximal 6C-Atomen der ggf. durch Sauerstoffatome unterbrochen ist, m die Werte 0 oder 1 oder 2 und n die Werte 1 oder 2 oder 3 sowie 0 — für den Fall, daß $Y{=}-CH{=}CH_2$ ist — annehmen kann. Als Substituenten für die Aminogruppe kommen $C_1$ bis $C_8$-Alkylreste, Arylreste, vorzugsweise der Phenylrest, Cycloalkylreste sowie die Gruppe $-CH_2-CH_2NH_2$ in Betracht. Die Aminogruppe kann auch in Form eines quaternären Ammoniumsalzes vorliegen. Unter diese allgemeine Formel fallen Alkylsilane wie Methyltrimethoxysilan, Methyltriethoxysilan, Propyltrimethoxysilan, Propylmethyldimethoxysilan, Propyltrimethoxysilan, Propylmethyldiethoxysilan, Butyltrimethoxysilan, Isobutyltrimethoxysilan. Als Beispiele für organofunktionelle Silane seien genannt : Vinyltrimethoxysilan, Vinyltriethoxysilan, Vinylmethyldimethoxysilan, γ-Chlorpropyltrimethoxysilan, γ-Chlorpropylmethyldimethoxysilan, α-Chlormethyldimethylmethoxysilan, γ-Mercaptopropyltrimethoxysilan, γ-Mercaptopropylmethyldimethoxysilan, γ-Aminopropyltrimethoxysilan, γ-Aminopropyltriethoxysilan, γ-Aminopropylmethyldiethoxysilan, N-Aminoethylaminopropyltrimethoxysilan, γ-Glycidyloxypropyltrimethoxysilan, γ-Methacryloxypropyltrimethoxysilan.

Die gemäß dem vorliegenden Verfahren modifizierte Stärke wird beim Einsatz von Alkylsilanen und von einigen organofunktionellen Silanen als Modifizierungsmittel von kaltem Wasser nicht benetzt. Sie ist dennoch heißwasserlöslich.

Die erfindungsgemäß modifizierten Stärken zeigen beim Einsatz einer großen Zahl von Organosilanen als Modifizierungsmittel eine gute Rieselfähigkeit, während unmodifizierte Stärken praktisch nicht rieselfähig sind. Diese Verbesserung tritt hauptsächlich bei Kartoffelstärke auf, jedoch auch andere Stärkearten zeigen beim Modifizieren mit Alkylsilanen eine gute Rieselfähigkeit.

Die wäßrigen Lösungen der erfindungsgemäß modifizierten Stärken können eine höhere Viskosität als die der reinen Stärken besitzen, die sich jedoch beim Einrühren oder Dispergieren von Füllstoffen nicht nachteilig auswirkt.

Aufgrund der genannten Eigenschaften eignen sich die nach dem erfindungsgemäßen Verfahren hergestellten modifizierten Stärken insbesondere auf solchen Anwendungsgebieten von Stärke, in denen native und die bekannten derivatisierten Stärken die bestehenden Anforderungen nicht erfüllen. Beispielhaft seien genannt die Anwendung als Bindemittel für Mineralfasern, als Textilhilfsmittel, als Leimungsmittel für die verschiedenen Papieranwendungen sowie als Füllstoffe für Kunststoffe.

Zusätzlich zu diesen als Einsatzgebiete für Stärke an sich bekannten Verwendungsgebieten lassen sich die erfindungsgemäß hergestellten modifizierten Stärken jedoch auch noch zur Hydrophobierung und Oleophobierung von cellulosehaltigen Materialien, wie z. B. Papier, Pappe oder Holz einsetzen. Besonders geeignet dafür sind die wäßrigen Lösungen, die durch Umsetzung der verkleisterten Stärke mit dem Organosilan und einer Alkalialuminatlösung erhalten werden, da diese Lösungen sehr stabil sind und in ihrer Konzentration an Stärke und Organosilan sehr weit variierbar sind.

## Beispiel 1

Es wurden 0,82 g ( = 0,005 0 Mol) Propyltrimethoxysilan in 400 g destilliertem Wasser mit Hilfe eines Magnetrührers eingerührt. Nach etwa 15 Minuten lag ein einwandfreies Hydrolysat vor (Verschwinden der anfänglichen Trübung), in das daraufhin nacheinander 193,8 g ( = 1 Mol) Kartoffelstärke und 0,82 g ( = 0,004 5 Mol) Natriumaluminat in Form einer 10 %igen wäßrigen Lösung eingerührt wurde. Bei der Berechnung der Molmenge der Stärke wurde hier, wie auch in den folgenden Beispielen, der jeweilige Wassergehalt der Stärke berücksichtigt. Dieses Gemisch wurde unter Rühren kurzfristig auf 40 °C erhitzt und anschließend im Laufe von zwei Stunden unter weiterem Rühren auf Raumtemperatur abgekühlt. Daraufhin wurde die Stärke abfiltriert und getrocknet.

Der Siliciumgehalt der auf diese Weise erhaltenen Stärke betrug 0,041 %. Aufgrund der angebotenen Silanmenge liegt der theoretische Si-Gehalt der Stärke bei 0,087 %, so daß etwa 47 % der angebotenen Silanmenge von der Stärke fixiert wurde.

Die silanisierte Stärke wurde einem Benetzungstest unterworfen, bei dem eine Spatelspitze der Stärke auf destilliertes Wasser, das sich in einem Reagenzglas befindet, aufgegeben wurde. Die gesamte Stärkemenge blieb dabei während mindestens 24 Stunden auf dem Wasser liegen.

Von einer weiteren Probe wurde die Rieselfähigkeit im Fordbecher bestimmt. Die Probe wurde vor der Bestimmung gesiebt. Die Ausrieselzeit bei Verwendung der 6 mm Düse betrug 33 s.

Zum Vergleich wurde Kartoffelstärke in der gleichen Weise mit der gleichen Menge von hydrolysiertem Propyltrimethoxysilan behandelt, jedoch kein Natriumaluminat hinzugefügt. Die auf diese Weise behandelte Stärke hatte nur einen Siliciumgehalt von 0,015 %, wurde von Wasser vollständig benetzt, sank im Benetzungstest sofort zu Boden und zeigte überhaupt keine Rieselfähigkeit.

## Beispiel 2

Kartoffelstärke wurde in gleicher Weise wie im Beispiel 1 behandelt, jedoch wurde die Menge des

Natriumaluminats in der Weise variiert, daß einmal das Verhältnis Silan : Aluminat bei 1 : 0,7 und bei einer zweiten Versuchsreihe bei 1 : 1,7 lag. Der Benetzungstest der dabei erhaltenen Stärke fiel in beiden Fällen wie im Beispiel 1 aus. Die Rieselfähigkeit betrug bei beiden Proben jeweils etwa 40 s.

## Beispiel 3

Die Arbeitsweise des Beispiels 1 wurde wiederholt. Nach dem Abfiltrieren der mit dem Silan behandelten Stärke wurde diese auf zweierlei Weise aufgearbeitet :

Eine Probe wurde direkt mit Wasser ausgewaschen und anschließend getrocknet (Probe A), während eine zweite Probe erst getrocknet wurde, daraufhin mit Wasser ausgewaschen und dann nochmals getrocknet wurde. Die Rieselfähigkeit war bei beiden Proben mit 33 s (6 mm Düse) gleich gut wie bei der Probe des Beispiels 1, die nicht ausgewaschen wurde, und auch der Benetzungstest gab die gleichen Ergebnisse wie im Beispiel 1.

Diese Versuche zeigen, daß die Art der Nachbehandlung der mit dem Silan behandelten Stärke keinen Einfluß auf die Eigenschaften der erfindungsgemäß behandelten Stärke hat, so daß bei Anwesenheit von Fremdstoffen ein Auswaschen mit Wasser durchaus möglich ist.

## Beispiel 4

In 2 600 g vorgelegtes destilliertes Wasser wurden 6,07 g ( = 0,037 Mol) Propyltrimethoxysilan eingerührt. Nach Erhalt einer klaren Lösung wurden in das gebildete Hydrolysat nacheinander 1 200 g Maisstärke ( = 6,19 Mol) und 6,75 g Natriumaluminat (0,037 Mol) in Form einer 20 %igen wäßrigen Lösung untergemischt. Unter Rühren mit einem Blattrührer wurde das Gemisch im Laufe von 20 Minuten auf 40 °C erwärmt. Nach Erreichen dieser Temperatur wurde während zwei Stunden ohne weitere Wärmezufuhr weitergerührt, wobei das Gemisch sich wieder abkühlte. Die erhaltene Stärke wurde anschließend abfiltriert und bei 40 bis 45 °C getrocknet.

Die Analyse ergab einen Si-Gehalt von 0,037 % ; demzufolge wurden etwa 35,6 % des angebotenen Silans von der Stärke fixiert.

Der Benetzungstest ergab, daß im Verlauf von mindestens 24 Stunden praktisch keine Benetzung stattfand und die so behandelte Stärke nach dem Aufbringen auf Wasser nicht zu Boden sank. Eine unbehandelte Maisstärke gleicher Charge sank dagegen sofort nach dem Aufbringen auf Wasser zu Boden.

## Beispiel 5

Es wurden 7,3 g ( = 0,033 Mol) γ-Aminopropyltriethoxysilan bzw. 7,8 g ( = 0,033 Mol) Glycidyloxypropyltrimethoxysilan jeweils in 2 800 g destilliertem Wasser bis zum Verschwinden der Trübung gelöst und in das erhaltene Hydrolysat jeweils 1 300 g Kartoffelstärke und 6,1 g Natriumaluminat ( = 0,033 Mol) untergerührt. Die weitere Verarbeitung erfolgt wie im Beispiel 4.

Die Analysen ergaben, daß von dem γ-Aminopropyltriethoxysilan 51,2 % und von dem Glycidyloxypropyltrimethoxysilan 44,8 % von der Stärke aufgenommen wurden.

## Beispiel 6

Die Arbeitsweise des Beispiels 4 wurde wiederholt mit dem Unterschied, daß anstelle des Propyltrimethoxysilans jeweils 0,005 Mol, bezogen auf ein Mol Maisstärke, der in der folgenden Tabelle genannten Silane eingesetzt wurden. Die Analysen ergaben die in der Tabelle genannten Werte.

| | Silanaufnahme pro 100 g Stärke | | |
|---|---|---|---|
| | theoretisch | gefunden | |
| | % Si | % Si | % d. Theorie |
| γ-Aminopropyltrimethoxysilan | 0,087 | 0,030 | 34,9 |
| γ-Mercaptopropyltrimethoxysilan | 0,087 | 0,033 | 37,9 |
| Methacryloxypropyltrimethoxysilan | 0,087 | 0,041 | 47,1 |

Die Probe mit dem Methacrylsilan wurde zusätzlich noch dem Benetzungstest unterworfen : auch von diesem Produkt blieb nahezu die gesamte auf das Wasser aufgebrachte Stärkemenge auf dessen Oberfläche während mindestens 24 Stunden liegen.

Beispiel 7

Analog Beispiel 1 wurden 0,74 g Propyltrimethoxysilan in 320 g Wasser unter Hydrolysatbildung aufgelöst und in die Lösung nacheinander 145 g oxidierte Kartoffelstärke und 0,827 g Natriumaluminat (als 10 %ige wäßrige Lösung) eingerührt. Das Molverhältnis Stärke : Silan betrug demzufolge 1 : 0,006. Die weitere Verarbeitung erfolgt wie im Beispiel 1. Die auf diese Weise behandelte Stärke hatte eine Rieselfähigkeit im Fordbecher (6 mm Düse) von 28 sec und wurde während 24 Stunden von Wasser im Benetzungstest praktisch nicht benetzt.

Beispiel 8

Es wurde wie im Beispiel 1 gearbeitet, mit dem Unterschied, daß eine kationisierte Stärke mit einem Molgewicht von 178,4 eingesetzt wurde. Der Substitutionsgrad der Stärke lag bei 0,03 DS. Pro Mol Stärke wurden 0,004 5 Mol Silan eingesetzt. Die mit dem Silan behandelte Stärke hatte eine Fordbecher-Rieselfähigkeit von 43 s (6 mm Düse) und wurde von Wasser nicht benetzt. Die im Benetzungstest aufgebrachte Silanmenge blieb während 24 Stunden vollständig auf dem Wasser liegen.

Beispiel 9

Die Arbeitsweise des Beispiels 8 wurde mit einer kationisierten Stärke des Substitutionsgrades 0,06 wiederholt. Zur Erzielung guter Ergebnisse im Benetzungstest mußte die Natriumaluminatmenge so vergrößert werden, daß das Molverhältnis Silan : Aluminat bei 1 : 1,5 lag.

Beispiel 10

In diesem Beispiel kam als derivatisierte Stärke ein Hydroxypropylether von oxidierter Kartoffelstärke zum Einsatz. Das Molgewicht betrug 202,5 g. Diese Stärke wurde analog Beispiel 1 mit einer Silan-Hydrolysat- und einer Natriumaluminatlösung behandelt, wobei das Molverhältnis Silan/Stärke bei 0,004 5 Mol Silan/Mol Stärke und das Molverhältnis Silan : Natriumaluminat bei 1 : 1 lag. Als Silan wurde Propyltrimethoxysilan eingesetzt.

Die behandelte Stärke hatte eine Rieselfähigkeit von 32 s im Fordbecher, 6 mm Düse, und blieb im Benetzungstest vollständig auf der Wasseroberfläche liegen.

Beispiel 11

Es werden zu 400 ml Wasser 1,64 g ( = 0,01 Mol) Propyltrimethoxysilan unter Rühren eingeführt. Nach Ablauf von 15 Minuten hatte sich ein vollkommen klares Hydrolysat gebildet. Zu dieser Lösung wurden daraufhin 196,4 g Kartoffelstärke mit einem Wassergehalt von 17,5 % hinzugefügt. Die erhaltene Suspension wird tropfenweise im Laufe von 5 Minuten mit 4 ml 10 %iger NaOH versetzt, wobei die Reaktionstemperatur auf 40 °C gehalten wird. Bei dieser Temperatur wird während zwei Stunden nachgerührt.

Die erhaltene modifizierte Stärke wird daraufhin abfiltriert und bei 50 °C während 24 Stunden getrocknet. Eine Probe der auf diese Weise erhaltenen Stärke schwimmt auf Wasser.

Von einer weiteren so hergestellten Probe wurde eine 2 %ige wäßrige Lösung durch Erhitzen mit Wasser auf 90 bis 94 °C hergestellt.

Filterpapier, das in eine solche Lösung eingetaucht wurde, zeigte nach dem Trocknen ebenfalls hydrophobe Eigenschaften.

Beispiel 12

Es wurden 9,7 g Kartoffelstärke mit einem Wassergehalt von 17,5 % bei 90 °C in 400 ml Wasser gelöst. Zu dieser Lösung werden bei 80 °C einer Lösung von hydrolysiertem Propyltrimethoxysilan (0,123 g) in 10 ml Wasser und anschließend im Verlauf von fünf Minuten 0,3 ml 10 %iger Natronlauge unter Rühren hinzugefügt. Daraufhin wurde auf Raumtemperatur abgekühlt. Die erhaltene Lösung zeigte bei dem Filterpapiertest des Beispiels 11 die gleichen hydrophoben Eigenschaften.

Die gesamte Lösung wurde daraufhin in Rotationsverdampfer zur Trockne eingedampft. Eine 2 %ige wäßrige Lösung des dabei erhaltenen Pulvers zeigte wiederum die gleichen hydrophoben Eigenschaften.

Beispiel 13

Analog Beispiel 12 werden 9,7 g Kartoffelstärke in 400 g Wasser bei erhöhter Temperatur aufgelöst

und mit 0,123 g Propyltrimethoxysilan als Hydrolysat in 10 ml Wasser gelöst, versetzt. Zu dieser Lösung werden dann 0,137 g Natriumaluminat, aufgelöst in 5 ml Wasser hinzugefügt und die erhaltene Lösung unter Rühren erkalten gelassen.

Die Ausprüfung erfolgte auf die gleiche Weise wie in Beispiel 12. Das Filterpapier zeigte sowohl nach dem Tränken mit der modifizierten Stärkelösung als auch mit der Lösung der eingedampften Stärke hydrophobe Eigenschaften.

Beispiel 14

Zum Nachweis der oleophoben Wirkung der erfindungsgemäß modifizierten Stärke wurde eine Stärkelösung entsprechend Beispiel 13 hergestellt und mit dieser Lösung Filterpapiere imprägniert und getrocknet. Die getrockneten Filterpapiere wurden folgenden Prüfungen unterworfen :

a) Beschriftung mit einem Glasmarkierungsstift, der Toluol als Lösungsmittel enthält. Das gefärbte Lösungsmittel fließt nicht aus und dringt nicht auf die Papierunterseite durch.

b) Auf das Papier wird ein Tropfen eines flüssigen Paraffins aufgetropft. Der Tropfen bleibt auf dem Papier liegen und dringt nicht in das Papier ein.

Zum Vergleich wurden Filterpapiere jeweils nur mit den einzelnen Komponenten, d. h. entweder mit einer reinen, unbehandelten Stärkelösung gleicher Konzentration oder mit einer Lösung von Propyltrimethoxysilan in Form seines Hydrolysats oder Natriumaluminat gleicher Konzentration imprägniert, getrocknet und wie unter a) und b) behandelt : Das Lösungsmittel des Glasmarkierungsstiftes dringt in allen Fällen auf die Unterseite des Papiers durch und der Paraffinkohlenwasserstoff fließt bei dem mit Stärke behandelten Papier gleich aus und bildet einen großen Fleck, während er auf dem mit Propyltrimethoxysilan oder Aluminat behandelten Papier nur einige Minuten liegen bleibt und dann vollständig von dem Papier aufgesaugt wird.

**Patentansprüche**

1. Verfahren zur Modifizierung von Stärke mit Organosilanen, dadurch gekennzeichnet, daß man die Stärke in innigen Kontakt mit einer wäßrigen Lösung des Organosilans in Gegenwart von Alkalialuminat oder Alkalihydroxiden bringt.

2. Verfahren gemäß Anspruch 1, dadurch gekennzeichnet, daß man das Organosilan in Wasser unter Bildung seines Hydrolysats löst, in dieser Lösung die Stärke suspendiert, daraufhin das Alkalialuminat und/oder das Alkalihydroxid hinzufügt und die erhaltene Suspension bei Temperaturen bis zu 45 °C rührt.

3. Verfahren gemäß Anspruch 1, dadurch gekennzeichnet, daß man die Stärke in Wasser bei erhöhter Temperatur auflöst und der so erhaltenen Lösung das Organosilan und das Aluminat hinzufügt.

4. Verfahren gemäß Anspruch 1, dadurch gekennzeichnet, daß man die Stärke in Wasser bei erhöhter Temperatur auflöst und der so erhaltenen Lösung das Organosilan und das Alkalihydroxid hinzufügt.

5. Verfahren gemäß einem der Ansprüche 1 bis 4, dadurch gekennzeichnet, daß das Alkalialuminat bzw. das Alkalihydroxid als wäßrige Lösung eingesetzt wird.

6. Verfahren gemäß Anspruch 1, dadurch gekennzeichnet, daß die wäßrige Lösung des Organosilans in konzentrierter Form mit der Stärke, dem Aluminat und/oder Alkalihydroxid in nahezu wasserfreiem Medium in geeigneten Misch- oder Knetaggregaten gemischt wird.

7. Verfahren gemäß einem der Ansprüche 1 bis 6, dadurch gekennzeichnet, daß das Molverhältnis des Organosilans zu dem Alkalialuminat oder dem Alkalihydroxid zwischen 1 : 0,4 und 1 : 1,5 liegt.

8. Verwendung von modifizierten Stärken, die gemäß einem der Ansprüche 1 bis 7 hergestellt worden sind, zur Hydrophobierung oder Oleophobierung von Stärken oder cellulosehaltigen Materialien.

9. Verwendung von modifizierten Stärken, die gemäß einem der Ansprüche 1 bis 7 hergestellt worden sind als Füllstoff in Polymeren.

**Claims**

1. Process for the modification of starch with organosilanes, characterised in that the starch is brought into intimate contact with an aqueous solution of the organosilane in the presence of alkali aluminate or alkali hydroxides.

2. Process according to claim 1, characterised in that the organosilane is dissolved in water with formation of its hydrolysate, the starch is suspended in this solution, the alkali aluminate and/or the alkali hydroxide is supplied thereto and the suspension obtained is stirred at temperatures up to 45 °C.

3. Process according to claim 1, characterised in that the starch is dissolved in water at elevated temperature and the organosilane and the aluminate are supplied to the solution thus obtained.

4. Process according to claim 1, characterised in that the starch is dissolved in water at elevated temperature and the organosilane and the alkali hydroxide are supplied to the solution thus obtained.

5. Process according to one of claims 1 to 4, characterised in that the alkali aluminate or the alkali hydroxide respectively is employed as aqueous solution.

6. Process according to claim 1, characterised in that the aqueous solution of the organosilane is mixed in concentrated form with the starch, the aluminate and/or alkali hydroxide in approximately water free medium in suitable mixing or kneading plant.

7. Process according to one of claims 1 to 6, characterised in that the molar ratio of the organosilane to the alkali aluminate or the alkali hydroxide amounts to 1 : 0,4 up to 1 : 1,5.

8. Use of modified starches which have been produced according to one of claims 1 to 7 for rendering starches or cellulose-containing materials hydrophobic or oleophobic.

9. Use of modified starches which have been produced according to one of claims 1 to 7 as filler in polymers.

**Revendications**

1. Procédé de modification de l'amidon avec des organosilanes, caractérisé en ce qu'on met en contact intime l'amidon avec une solution aqueuse de l'organosilane en présence d'un aluminate alcalin ou d'hydroxydes alcalins.

2. Procédé selon la revendication 1, caractérisé en ce qu'on dissout l'organosilane dans de l'eau avec formation de son hydrolysat, on met l'amidon en suspension dans cette solution, on ajoute ensuite l'aluminate alcalin et/ou l'hydroxyde alcalin et l'on agite la suspension obtenue à des températures s'élevant jusqu'à 45 °C.

3. Procédé selon la revendication 1, caractérisé en ce qu'on dissout l'amidon dans de l'eau à une température plus élevée et l'on ajoute à la solution ainsi obtenue l'organosilane et l'aluminate.

4. Procédé selon la revendication 1, caractérisé en ce qu'on dissout l'amidon dans de l'eau à une température plus élevée et l'on ajoute à la solution ainsi obtenue l'organosilane et l'hydroxyde alcalin.

5. Procédé selon l'une des revendications 1 à 4, caractérisé en ce que l'aluminate alcalin ou l'hydroxyde alcalin est ajouté sous forme de solution aqueuse.

6. Procédé selon la revendication 1, caractérisé en ce que la solution aqueuse de l'organosilane est mélangée sous une forme concentrée avec l'amidon, l'aluminate et/ou l'hydroxyde alcalin dans un milieu presque anhydre dans des appareils de mélange ou de malaxage appropriés.

7. Procédé selon les revendications 1 à 6, caractérisé en ce que le rapport molaire de l'organosilane envers l'aluminate alcalin ou l'hydroxyde alcalin est de 1 : 0,4 à 1 : 1,5.

8. Utilisation des amidons modifiés qui ont été fabriqués selon l'une des revendications 1 à 7, pour l'hydrofugation ou l'oléofugation d'amidons ou de matériaux renfermant de la cellulose.

9. Utilisation d'amidons modifiés qui ont été fabriqués selon l'une des revendications 1 à 7 comme matière de charge dans des polymères.